# EUROPEAN PATENT SPECIFICATION

(11) **EP 1 894 461 B1**
(45) Date of publication and mention of the grant of the patent: **07.12.2011**
(21) Application number: 06018196.3
(22) Date of filing: 31.08.2006
(51) Int. Cl.: A01D 41/127, G01N 21/85

(54) **System for real-time analysis of silage ingredients**
System zur Echtzeit-Analyse von Silagefutter
Système pour l'analyse en temps réel d'un ensilage

(43) Date of publication of application: 05.03.2008
(73) Proprietor: Monsanto Agrar Deutschland GmbH, 40470 Düsseldorf (DE)
(72) Inventor: Holzhausen, Eckhard, 46342 Velen (DE); Möllenbruck, Frank, 46325 Borken (DE)
(74) Representative: pronovem

(56) References cited:
- EP-A2- 1 271 139
- DE-C1- 10 236 515
- US-A- 4 742 228
- US-A1- 2003 063 276

## Description

### Field of the invention

The present invention relates to an apparatus using near infrared spectrometry for the analysis of chopped plant material and in particular for the real-time analysis of green corn or corn silage.

### State of the art

In the field of agriculture, and particularly in the field of corn breeding and development of new corn varieties, it is of major importance to achieve real-time analysis of the constituents of the silage.

The use of near infrared spectroscopy (NIRS) is a well-established technique for detecting chemical and physical properties of various materials.

Non-restrictive examples of constituents that can be detected by using near infra red spectroscopy include moisture, protein, dry matter content, starch and oil content, extractable starch, density, digestibility,

The principle of NIR spectrometry lies in the wavelength analysis of incident light from a monochromatic light source passing through various diffraction means such as a prism, whose angular displacement relative to the incoming light can be correlated with a certain wavelength, which is dispersed by the matter to be analysed to the light sensor.

Nevertheless, most of those NIR spectrometers are only suitable for laboratory use and, in the prior art techniques, the samples have to be harvested and collected, bagged, labelled, dried and ground to be finally sent to an NIR laboratory, where the constituents are analysed. Therefore, real need exists for an NIRS instrument combined with a chopper to automate the process of harvesting chopped plant material such as green corn, to automate the whole process of analysis in the shortest possible time scale.

An apparatus with real-time analysis provides corn breeders with real-time information to improve their development through a high number of screened samples, helping the development of new corn varieties.

The main problem with an NIR instrument combined with a corn chopper is to achieve accurate results despite extreme vibrations, dusty environment, variable outside temperature and differing humidity. Therefore, the management of dust, vibration and an extremely inhomogeneous chopped plant material containing corn grain, green leaves and stem parts in order to get reproducible NIR spectrometry results is the major challenge of the present invention.

Document US-6,483,583 discloses an apparatus and a method for using NIR spectrography for real time analysis of the constituents of grains and forage. In this document, NIR spectra are taken during the silage harvest and an NIR spectrometer is placed above a conveyor belt that is horizontally moving the material underneath the spectrometer. The drawback of this system is that in practice it is impossible to obtain a layer that is sufficiently uniform and flat on the conveyor belt. Since the material is differing in particle size, it is impossible to achieve a uniform and flat sheet of inhomogeneous material; therefore, the distance between the NIRS optic and the harvested material to be analysed is continuously changing, together with differing air humidity and temperature, this results in low spectra quality. Furthermore, since the optical part is free pending over the conveyor belt, it is continuously disturbed by important dust quantities and the obtained spectra are not reliable.

Furthermore, in the above-described system, there is an important time delay between the real time analysis and the collection of the calibration samples which introduces the sampling error into the NIR calibration.

Further examples of prior art systems can be found in US 2003 063 276, US 4 742 228, DE 102 36 515, EP 1 271 139.

### Aims of the invention

The present invention aims to overcome the drawbacks of the prior art and in particular aims to provide an apparatus for the analysis of green plant chops, and in particular of green corn chops and corn silage under harvest conditions through NIRS spectroscopy under reproducible conditions with more accurate spectra's than those proposed by the prior art.

### Summary of the invention

The present invention discloses a system as defined in claim 1.

Preferred embodiments of the present invention comprise at least one of the following features:
- the turning speed of said means is adaptable to the size of the chopped plant material to reach a constant material stream at the point of constriction;
- the NIR spectrometer is a LED array spectrometer.

The present invention further discloses:
- the use of the system as in claim 1 on research plot corn silage chopper for the real time analysis of dry matter and quality parameters of corn chops;
- the use of the system as in claim 1, wherein the quality parameters to be measured are starch content, digestibility, cell wall content and sugar content;
- the use of the system as in claim 1 on a twin research plot corn silage chopper;
- the use of the system as in claim 1 for the off-line analysis of green chops and silage samples as well as feed mixtures.

### Short description of the drawings

Fig. 1 represents the essential elements of the system of the present invention described in claim 1

Fig. 2 represents a detail top view of the conveyor means with the recess allowing the NIR spectra not to be disturbed by the passage of said means in front of the NIR spectrometer.

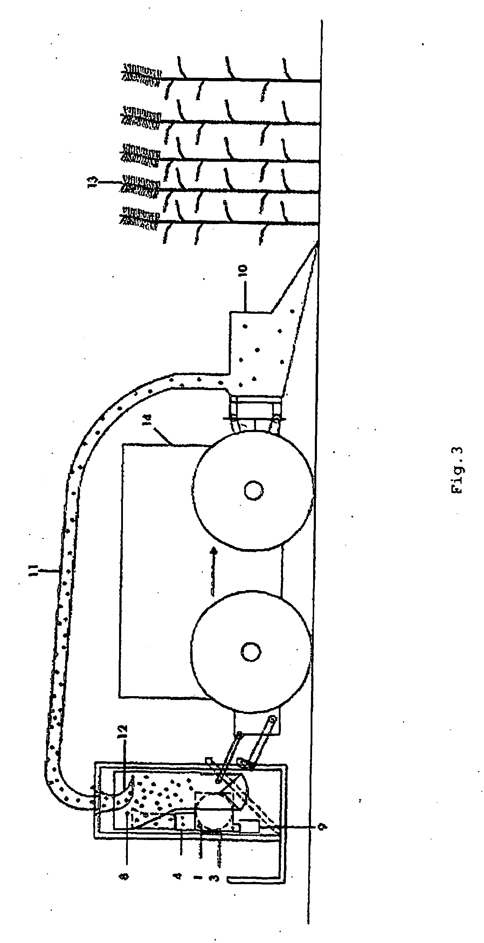

Fig. 3 represents the position of the system of the present invention on a research plot corn silage chopper

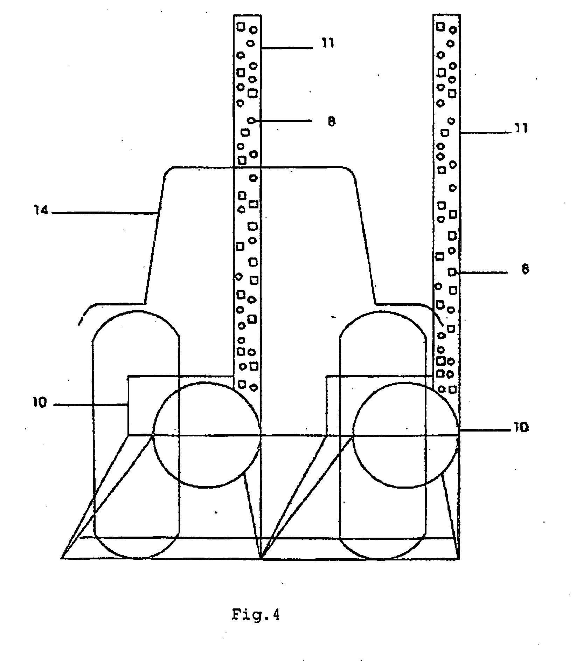

Fig. 4 represents the possibility of a twin research plot corn silage chopper where two systems according to the present invention can be used on the same chopper.

### Detailed description of the invention

The apparatus of the present invention includes a conveyor means 1 which can be a bucket wheel that is placed in a vertical duct or a profiled conveyor belt. This conveyor means 1 guides a sample through a duct 4 with a defined depth in a defined speed along an essentially transparent pane 2 (quartz glass). The pane 2 is adjacent to an NIR spectrometer 3 taking spectra of the sample.

The bucket wheel or conveyor belt is either horizontally or vertically mounted with profiled attachments on its surface 6. The attachments are of such kind that they compulsory guide the chopped material 8 through the duct 4 but do not interfere with the NIR measurements. To achieve this, the attachments (profile) of the conveyor means comprises a recess 7 which is adaptable to the size and the penetration depth of the Infra red beam.

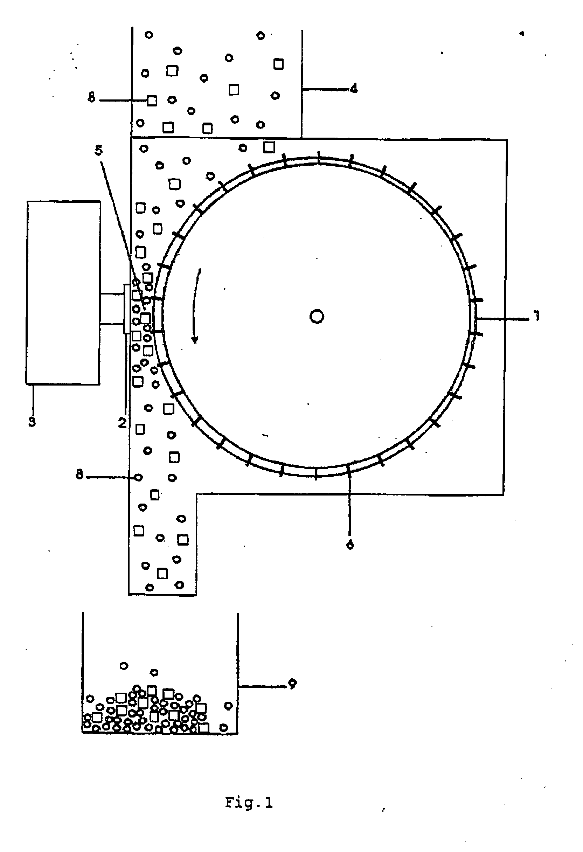

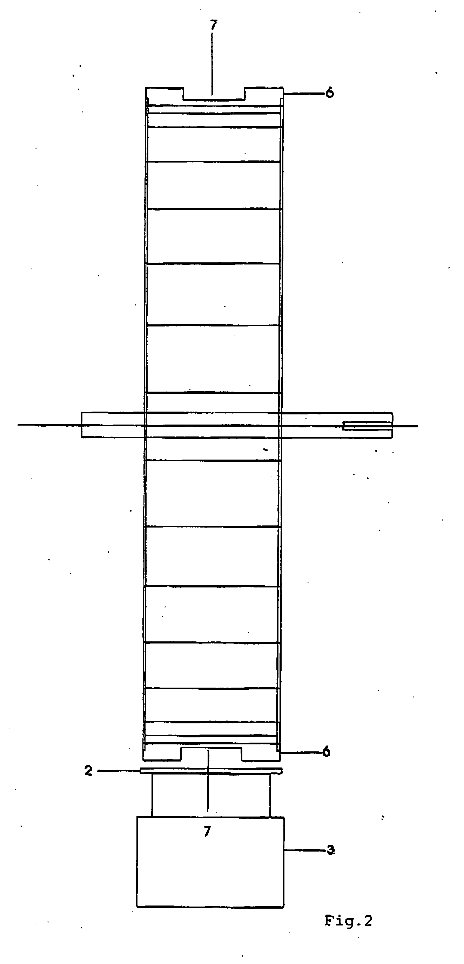

The inhomogeneous material comprising corn grain and leaves and stems is slightly compressed at a point of constriction 5 where the glass pane 2 is placed which insures a constant distance to the NIR optic (see Fig.1 and 2). If the sample has to be transported in a horizontal direction, the NIR spectrometer 3 can be situated at the end of a conveyor belt. In this case, the belt is equipped with the same kind of attachment to compulsory guide the material 8 through the point of constriction 5 at the end of the belt.

Green chopped material 8 is difficult to analyse because of its non-homogeneity. As mentioned above, corn forage is a mixture of grains, leaves and stem parts that differ in constituency and particle size so that it becomes difficult to perform accurate real-time NIR analysis.

It was first observed by the inventor that the easiest way to take real time NIR spectra on the chopped green plant material is to place a transparent pane 2 with an NIRS spectrometer 3 in the delivery chute 11 of the maize chopper but the problem of this approach was that the flow of inhomogeneous material is not constant and leads to an inconstant stream of inhomogeneous silage.

In addition, it was necessary to take representative samples out of the silage to measure the needed reference data for the calibration. By doing this after taking the spectra, the sampling error was present in the calibration set as well, leading to a systematic evaluation error.

In the present invention, the green plant material is forced (constricted) with a conveyor belt or a bucket wheel to the NIR spectrometer 3 and passes before the transparent pane in a constant thickness and essentially constant density. This allows reproducible and accurate spectra's of various substances like dry matter content, starch, soluble sugars, digestibility, ... Additionally, another advantage of the present system is that passing the green plant matter 8 layer before the transparent pane 2 cleans the pane 2, which additionally increases the accuracy of the NIR spectra's.

### Example

The following example of calibration statistics for calibrations built on one year trial data illustrates the difference in coefficient of determination of cross-validation (R²V) and the standard error of cross-validation (SECV) from a comparing test of the existing methods with the new invention. Data obtained in three locations harvested in 2005:

| | **Delivery chute (prior art)** | | **Conveyor belt (prior art)** | | **Cell wheel (invention)** | |
|---|---|---|---|---|---|---|
| **Constituent** | **R²V** | **SECV** | **R²V** | **SECV** | **R²V** | **SECV** |
| Dry matter | 0.85 | 1.18 | 0.88 | 1.16 | 0.97 | 1.09 |
| Starch | 0.76 | 2.22 | 0.79 | 2.14 | 0.88 | 2.06 |
| Soluble sugars | 0.72 | 1.62 | 0.76 | 1.36 | 0.81 | 1.18 |
| In vitro digestibility cellulase | 0.46 | 1.76 | 0.54 | 1.72 | 0.66 | 1.66 |

**Reference number list**
- 1.: Conveyor means (bucket wheel, conveyor belt)
- 2.: Transparent pane
- 3.: NIR spectrometer
- 4.: Duct
- 5.: Point of constriction
- 6.: Profiled surface of the conveyor means
- 7.: Recess
- 8.: Chopped plant material
- 9.: Sample bin
- 10.: Chopper
- 11.: Delivery chute
- 12.: Rotary sampler
- 13.: Corn plants
- 14.: Tool carrier

## Claims

1. System for the real-time analysis of chopped green corn or corn silage, said system comprising a bucket wheel or a conveyor belt that compulsory guide said chopped green corn or corn silage through a point of constriction (5) in a duct (4), said point of constriction (5) being equipped with a substantially transparent pane (2) facing the optic of a NIR spectrometer device (3), said device being arranged adjacent to said pane (2) and said pane being in direct contact with the passing-through green corn or corn silage in order to be continuously scanned by said spectrometer (3), wherein said bucket wheel or conveyor belt has profiled attachments (6) on its surface wherein the profile has a recess (7) arranged in the scanning area of the spectrometer(3) and wherein the depth of said recess (7) is adapted to the penetration depth and to the width of the NIR light beam in order to avoid any influence on the NIR spectra of the chopped plant material.

2. System as in Claim 1, wherein said NIR spectrometer (3) is a LED array spectrometer.

3. System according to any of the previous claims 1 or 2 wherein the turning speed of said bucket wheel or conveyor belt is adaptable to the size of the chopped plant material (8) to reach a constant speed at the point of constriction (5).

4. Use of the system as in Claims 1 to 3 on research plot corn silage chopper for the real time analysis of dry matter and quality parameters of corn chops.

5. Use of the system as in Claim 4, wherein said quality parameters are starch content, digestibility, cell wall content and sugar content.

6. Use of the system as in Claim 4, wherein said research plot corn silage chopper is a twin research plot corn silage chopper.

7. Use of the system as in Claims 1 to 3 for the off line analysis of green chops and silage samples as well as feed mixtures.

## Patentansprüche

1. System zur Echtzeitanalyse von gehackte Grünmais- oder Maissilage, wobei das System ein Schaufelrad oder ein Förderband umfasst, das die gehackte Grünmais- oder Maissilage unter Zwangsführung in einem Kanal (4) durch eine verengte Stelle (5) leitet, wobei die verengte Stelle (5) mit einer im Wesentlichen transparenten Scheibe (2) versehen ist, die der Optik eines NIR-Spektrometergeräts (3) zugewandt ist, wobei das Gerät benachbart der Scheibe (2) angeordnet ist, und wobei die Scheibe in direktem Kontakt mit der vorbeilaufenden Grünmais- oder Maissilage steht, um vom Spektrometer (3) kontinuierlich gescannt zu werden, wobei das Schaufelrad oder das Förderband Profilaufsätze (6) auf der Oberfläche aufweist, wobei das Profil eine Ausnehmung (7) enthält, die im Scanningbereich des Spektrometers (3) angeordnet ist, und wobei die Tiefe der Ausnehmung (7) an die Penetrationstiefe und die Breite des NIR-Lichtstrahls angepasst ist, um eine Beeinflussung der NIR-Spektren des gehackten Pflanzenmaterials zu vermeiden.

2. System gemäß Anspruch 1, wobei das NIR-Spektrometer (3) ein LED-Array-Spektrometer ist.

3. System gemäß einem der vorherigen Ansprüche 1 oder 2, wobei die Drehgeschwindigkeit des Schaufelrades oder des Förderbands an die Größe des gehackten Pflanzenmaterials (8) anpassbar ist, um an der verengten Stelle (5) eine konstante Geschwindigkeit zu erzielen.

4. Verwendung des Systems gemäß Anspruch 1 bis 3 bei einer Forschungsfeld-Maissilagehackvorrichtung zur Echtzeitanalyse von Trockenmaterie und Qualitätsparametern von gehackten Mais.

5. Verwendung des Systems gemäß Anspruch 4, wobei die Qualitätsparameter Stärkegehalt, Verdaulichkeit, Zellwandgehalt und Zuckergehalt sind.

6. Verwendung des Systems gemäß Anspruch 4, wobei die Forschungsfeld-Maissilagehackvorrichtung eine Forschungsfeld-Maissilagedoppelhackvorrichtung ist.

7. Verwendung des Systems gemäß Anspruch 1. bis 3 zur Offline-Analyse von Grünmais- und Silageproben sowie Futtermischungen.

## Revendications

1. Système pour l'analyse en temps réel de maïs vert broyé ou d'ensilage de maïs, ledit système comprenant une roue à cellules ou un tapis roulant qui guide obligatoirement ledit maïs vert broyé ou ensilage de maïs à travers un point d'étranglement (5) dans un conduit (4), ledit point d'étranglement (5) étant équipé d'une vitre (2) sensiblement transparente faisant face à l'optique d'un dispositif de spectrométrie infrarouge proche (3), ledit dispositif étant disposé adjacent à ladite vitre (2) et ladite vitre étant en contact direct avec le maïs vert ou l'ensilage de maïs qui défile afin d'être balayé en continu par ledit spectromètre (3), **caractérisé en ce que** ladite roue à cellules ou tapis roulant comprend des fixations profilées (6) sur sa surface, **en ce que** le profil comporte un évidement (7) disposé dans la zone de balayage du spectromètre (3), et **en ce que** la profondeur dudit évidement (7) est adaptée à la profondeur de pénétration et à la largeur du faisceau lumineux infrarouge proche afin d'éviter toute influence sur les spectres infrarouges proches de la matière végétale broyée.

2. Système selon la revendication 1, **caractérisé en ce que** ledit spectromètre infrarouge proche (3) est un LED-Array spectromètre.

3. Système selon l'une quelconque des revendications 1 et 2 précédentes, **caractérisé en ce que** la vitesse de rotation de ladite roue à cellules ou tapis roulant peut être adaptée à la taille de la matière végétale broyée (8) pour atteindre une vitesse constante au point d'étranglement (5).

4. Utilisation du système selon les revendications 1 à 3 sur un broyeur d'ensilage de maïs issu d'une parcelle de recherche pour analyser en temps réel la matière sèche et les paramètres de qualité de broyat de maïs.

5. Utilisation du système selon la revendication 4, **caractérisé en ce que** lesdits paramètres de qualité sont la teneur en amidon, la digestibilité, la teneur en membranes cellulaires et la teneur en sucre.

6. Utilisation du système selon la revendication 4, **caractérisé en ce que** ledit broyeur d'ensilage de maïs issu d'une parcelle de recherche est un broyeur double d'ensilage de maïs issu d'une parcelle de recherche.

7. Utilisation du système selon les revendications 1 à 3 pour l'analyse hors ligne de broyat de maïs vert et d'échantillons d'ensilage ainsi que de mélanges alimentaires.
